# EUROPÄISCHE PATENTANMELDUNG

(11) **EP 0 714 041 A2**
(43) Veröffentlichungstag der Anmeldung: **29.05.1996**
(21) Anmeldenummer: 95118511.5
(22) Anmeldetag: 24.11.1995
(51) Int. Cl.: G02B 6/12

(54) **Lichtwellenleitende Struktur auf einem Substrat**

(30) Priorität: 25.11.1994 DE 4441973
(71) Anmelder: TUHH-Technologie GmbH, D-21079 Hamburg (DE)
(72) Erfinder: Rüter,Dirk,Dipl.-Ing., D-22087 Hamburg (DE); Rolf,Stefan, D-22337 Hamburg (DE)
(74) Vertreter: Niedmers, Ole, Dipl.-Phys.

(57) **Zusammenfassung**

Es wird eine lichtwellenleitende Struktur (10) auf einem Substrat (11) vorgeschlagen, wobei auf dem Substrat (11) wenigstens eine a-SiC-Schicht (12) aufgebracht ist, die im sichtbaren Spektralbereich photolumineszierende Eigenschaften aufweist.

## Beschreibung

Die Erfindung betrifft eine lichtwellenleitende Struktur auf einem Substrat.

Lichtwellenleitende Schichten werden für einen weiten Anwendungsbereich, beispielsweise in der integrierten Optik benötigt bzw. verwendet. Bisher wurden lichtwellenleitende Schichten in Form sogenannter epitaktischer Halbleiterschichten ausgebildet, die vielfach als aktive, lichtemittierende Elemente auf Werkstoffen auf der Basis der Elemente der III. und V. Hauptgruppe des Periodensystems der Elemente zum Einsatz kommen. Es sind aber auch amorphe bzw. glasartige Schichten bekannt, die auf Substraten aufgebracht werden können, die im Gegensatz zu den meist im roten oder infraroten Spektralbereich emittierenden Schichten aus Elementen der III. und V. Hauptgruppe des Periodensystems der Elemente regelmäßig passiv sind, d.h. Licht wird in den die Schicht bildenden Werkstoffen dieser Art zwar weitergeleitet, kann jedoch selbst nicht erzeugt werden.

Es ist bekannt, daß die Technologie zur Ausbildung lichtleitender Schichten auf der Basis von Werkstoffen der Elemente der III. und V. Hauptgruppe des Periodensystems der Elemente sehr aufwendig und kostspielig ist und aus diesem Grunde für viele Anwendungszwecke nicht herangezogen werden kann. Zudem können nur ganz bestimmte chemisch verwandte und kristalline Substrate beschichtet werden.

Es ist Aufgabe der vorliegenden Erfindung, eine lichtwellenleitende Struktur auf einem Substrat zu schaffen, die lichtemittierende, aktive Wellenleiteigenschaften aufweist, wobei dafür auf bisher verwendete Elemente der III. bis V. Hauptgruppe des Periodensystems der Elemente verzichtet werden kann, wobei die lichtwellenleitende Struktur auf einem Substrat einfach und kostengünstig herstellbar sein soll und ähnliche Wellenleiteigenschaften haben soll, wie sie bisher lediglich bei Schichten auf der Grundlage von Elementen der III. bis V. Hauptgruppe des Periodensystems der Elemente anzutreffen sind.

Gelöst wird die Aufgabe gemäß der Erfindung dadurch, daß auf dem Substrat eine a-SiC-Schicht aufgebracht wird, die im sichtbaren Spektralbereich photolumineszierende Eigenschaften aufweist.

Der Vorteil der erfindungsgemäßen lichtwellenleitenden Struktur auf dem Substrat liegt im wesentlichen darin, daß die a-SiC-Schicht die Eigenschaft hat, UV-Strahlung in sichtbares Licht umzuwandeln und dieses effektiv leiten zu können. Die a-SiC-Schicht hat somit genauso wie die bisher verwendeten Schichten auf der Basis von Elementen der III. bis V. Hauptgruppe des Periodensystems der Elemente aktive Wellenleiteigenschaften, wobei insbesondere vorteilhaft ist, daß die erfindungsgemäße Schicht auf der Basis des Elementhalbleiters Silizium gebildet wird, der einen sehr viel preisgünstigeren Werkstoff darstellt, als die Elemente der III. bis V. Hauptgruppe des Periodensystems der Elemente und darüberhinaus auch noch für nahezu alle elektronischen Bauelemente die Basis darstellt. Schließlich zeigt die erfindungsgemäße lichtwellenleitende Schicht auf dem Substrat eine gute thermische, chemische und mechanische Beständigkeit und eine sehr kurze Abklingzeit und geringe Temperaturempfindlichkeit der Photolumineszenz, wobei die geringe Eigenabsorption der Photolumineszenz und eine hohe Absorption im UV-Bereich hohe Lichtdichten im Wellenleiter ermöglichen.

Gemäß einer vorteilhaften Ausgestaltung der Erfindung enthält die a-SiC-Schicht Wasserstoff und Chlor und/oder Sauerstoff oder Stickstoff. Durch Zugabe dieser Elemente im Zuge der Herstellung der Schicht wird eine geringe Eigenabsorption erreicht und es kann die Lage des Maximums der Photolumineszenzeigenschaften der Schicht verändert werden. Eine Beeinflussung ist auch möglich in Kombination mit der Variation der Elemente durch eine Verringerung der Substrattemperatur oder der Plasmaleistung im Zuge der Herstellung der Schicht.

Die Dicke der a-SiC-Schicht liegt vorzugsweise im Bereich von 0,1 bis 10 µm, wobei der Brechungsindex der a-SiC-Schicht im Bereich von n = 1,7 bis 2,5, vorzugsweise im Bereich von 1,4 bis 1,7 liegt.

Vorteilhafterweise ist auf der a-SiC-Schicht eine siliziumhaltige Abdeckschicht vorgesehen, die die lichtwellenleitende a-SiC-Schicht vor Staub und anderen Verunreinigungen schützen, die sich sehr störend auf die Ausbreitung des im eigentlichen Wellenleiters, d.h. der a-SiC-Schicht geführten Lichtes auswirken können.

Ebenso wie die äußere Abdeckschicht auf der a-SiC-Schicht kann auch vorzugsweise zwischen dem Substrat und der a-SiC-Schicht eine siliziumhaltige Abstandschicht vorgesehen sein, wobei die Abdeckschicht und die Abstandschicht in bezug auf ihre werkstoffmäßige Zusammensetzung gleich ausgebildet sein können. Die Abstandschicht wird dann nötig, wenn das eigentliche Substrat eine optische Absorption oder eine Oberflächenrauhigkeit, wie sie beispielsweise bei integrierten Schaltungen anzutreffen ist, die grundsätzlich auch das erfindungsgemäße Substrat bilden können, aufweist. Die Abstandschicht muß hingegen dann nicht aufgebracht sein, wenn das Substrat sehr glatt ist und eine geringe optische Absorption und einen geringen Brechungsindex mit der auf dem Substrat aufgebrachten lumineszierenden Wellenleiterschicht aufweist.

Der Brechungsindex n der Abdeckschicht und/oder der Abstandschicht ist dabei vorteilhafterweise ≧ 1,5.

Die Schichtdecke der Abdeckschicht liegt vorzugsweise im Bereich von 0,1 bis 10 µm, wohingegen die Schichtdicke der Abstandschicht im Bereich von 2 bis 5 µm liegt.

Bei einer ganz besonders vorteilhaften Ausgestaltung der Erfindung ist im Substrat ein mit der a-SiC-Schicht in Kontakt stehendes, den sichtbaren Spektralbereich von Licht detektierendes Element vorgesehen, wobei mit dieser Ausgestaltung die Wellenleitschicht mit einer Siliziumphotodiode, die das Element beispielsweise bildet, hochempfindliche, schnelle UV-Detektoren erzeugt werden können.

Dadurch, daß vorteilhafterweise die laterale Ausdehnung der a-SiC-Schicht groß gegen die laterale Ausdehnung des Detektionselementes ist, ist es möglich, daß das zu detektierende UV-Licht großflächig aufgefangen werden kann und das in der a-SiC-Schicht erzeugte sichtbare Lumineszenzlicht konzentriert und mit hoher Strahlungsdichte auf eine sehr kleine Detektorfläche geleitet werden kann. Besonders vorteilhaft ist es dabei, daß ein derartig aufgebauter UV-Detektor völlig unempfindlich gegen sichtbares oder infrarotes Licht ist, da dieses in der a-SiC-Schicht einschließlich ihrer Modifikationen durch Zugabe bestimmter Elemente keine Photolumineszenz erzeugt.

Die Erfindung wird nun unter Bezugnahme auf die nachfolgenden schematischen Zeichnungen anhand eines Ausführungsbeispieles im einzelnen beschrieben. Darin zeigen:
- Fig. 1: in der Seitenansicht im Schnitt den typischen Aufbau einer lichtwellenleitenden Struktur mit einer lichtleitenden a-SiC-Schicht, die von einer Abdeckschicht und einer Abstandschicht begrenzt ist, und
- Fig. 2: eine lichtwellenleitende Struktur gemäß dem Aufbau der Darstellung von Figur 1, jedoch mit einem zusätzlichen lichtdetektierenden Element im Substrat, auf dem die Schichten aufgebracht sind.

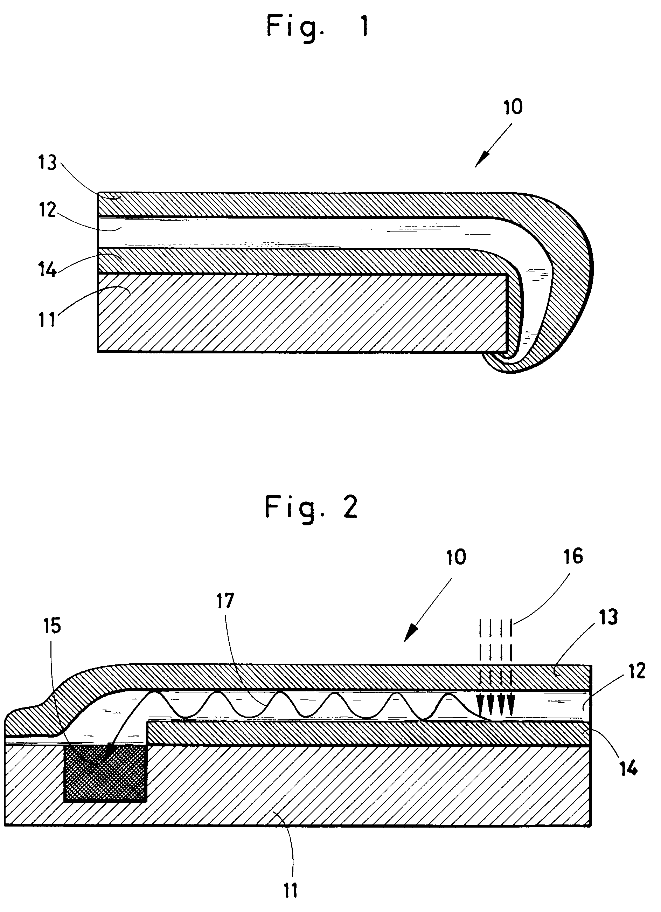

Die lichtwellenleitende Struktur 10, vgl. Fig. 1, besteht im wesentlichen aus einem Substrat 11, auf dem wenigstens eine a-SiC-Schicht 12 aufgebracht ist, die im sichtbaren Spektralbereich photolumineszierende Eigenschaften aufweist. Bei dem in Fig. 1 dargestellten Beispiel ist die a-SiC-Schicht 12 nicht unmittelbar auf dem Substrat 11 aufgebracht, sondern auf einer Abstandschicht 14, die auf dem Substrat 11 aufgebracht ist. Auf der auf der Abstandschicht 14 aufgebrachten a-SiC-Schicht 12 kann eine Abdeckschicht 13 vorgesehen sein, wobei die Abdeckschicht 13 als auch die Abstandschicht 14 siliziumhaltig ausgebildet sein können. Die Schichtdicke der Abdeckschicht 13 liegt im Bereich von 0,1 bis 10 µm, wohingegen die Schichtdicke der Abstandschicht 14 im Bereich von 2 bis 5 µm liegt.

Die eigentliche lichtwellenleitende a-SiC-Schicht 12 ist 0,1 bis 10 µm dick. Die a-SiC-Schicht 12 kann Wasserstoff und Chlor und/oder Sauerstoff und/oder Stickstoff enthalten, wobei durch Zugabe der vorangehend aufgeführten einzelnen Elemente die lichtwellenleitende Eigenschaft der a-SiC-Schicht 12 beeinflußt werden kann, d.h. die Eigenabsorption kann stark verringert werden und es kann damit unter anderem das Maximum der Lumineszenz zu kürzeren Wellenlängen verschoben werden.

Für bestimmte Anwendungsfälle ist es auch möglich, als lichtwellenleitende Schicht eine Mehrzahl von a-SiC-Schichten 12 aufeinander auszubilden, um bestimmte gewünschte optische Eigenschaften und photolumineszierende Eigenschaften der lichtwellenleitenden Schicht gezielt einstellen zu können.

Die lichtwellenleitende bzw. lumineszierende a-SiC-Schicht 12 soll regelmäßig einen hohen Brechungsindex bei geringer Absorbtion für sichtbares Licht und hohe Absorbtion für UV-Licht aufweisen. Die Schichtdicke der a-SiC-Schicht 12 liegt im Bereich von 0,1 bis 10 µm, wobei der Brechungsindex der a-SiC-Schicht 12 im Bereich von n = 1,7 bis 2,5, vorzugsweise im Bereich von 1,7 bis 2,2 liegt.

Als das Substrat 11 bildender Werkstoff kommen grundsätzlich alle Werkstoffe mit geringer Oberflächenrauhigkeit und nicht zu tiefem Schmelzpunkt in Frage, beispielsweise Gläser, Kunststoffe, Metalle, Keramiken, insbesondere Silizium sowie Halbleiteroberflächen, insbesondere auch integrierte Schaltungen aus Silizium in Frage, die mit der lichtwellenleitenden a-SiC-Schicht 12 beschichtet werden können.

Aus Fig. 2 ist eine modifizierte lichtwellenleitende Struktur 10 ersichtlich, bei der im Substrat 11 ein mit der a-SiC-Schicht 12 in Kontakt stehendes, den sichtbaren Spektralbereich von Licht detektierendes Element 15 vorgesehen ist. Die Grundeigenschaft der hier beschriebenen lichtwellenleitenden Struktur 10, nämlich UV-Licht 16 in sichtbares Licht 17 umwandeln und dieses effizient leiten zu können, kann durch die Ausgestaltung gemäß Fig. 2 mit dem lichtdetektierenden Element 15 derart kombiniert werden, daß dadurch UV-Detektoren erzeugt werden können, wobei das lichtdetektierende Element 15 beispielsweise eine herkömmliche Si-Photodiode sein kann. Da die laterale Ausdehnung der a-SiC-Schicht 12 groß gegen die laterale Ausdehnung des lichtdetektierenden Elements 15 ist, kann beispielsweise das erzeugte, sichtbare Licht 17 (Lumineszenzlicht) konzentriert und mit hoher Strahlungsdichte auf die sehr kleine Detektorfläche des lichtdetektierenden Elementes 15 geleitet werden. Auch ist ein derart gekoppelter Aufbau der eigentlichen lichtwellenleitenden Struktur 10 mit dem lichtdetektierenden Element 15 völlig unempfindlich gegen sichtbares oder infrarotes Licht, da dieses in den a-SiC-Schichten 12 und ihren oben beschriebenen Abwandlungen keine Photolumineszenz erzeugt.

Da die lichtempfindliche Fläche des Elements 15 klein sein kann, ist die Sperrschichtkapazität entsprechend klein mit der Folge eines entsprechend kleinen Dunkelstroms, der sich in einem geringen Rauschen, hoher Empfindlichkeit und sehr kurzen Ansprechzeiten des lichtdetektierenden Elements 15 äußert.

Die a-SiC-Schicht 12 kann auf dem Substrat 11 durch die ansich bekannten plasmaunterstützten Niederdruck CVD-Verfahren hergestellt werden, was gleichermaßen auch für die Abstandschicht 14 und die Abdeckschicht 13 gilt. Eine geeignete Plasmaanregung durch Hoch- oder Niederfrequenzspannung (2,45 GHz, 13,7 Mhz oder 40 kHz mit 10 bis 500 W) erzeugt im allgemeinen ein leistungsstarkes Plasma. Als Prozeßgas wird beispielsweise (CH₃)₃ SiCl bei einem Druck von 50 Pa in eine PeCVD-Anlage eingespeist, wobei zur Abscheidung der Abstandschicht 14 bzw. der Abdeckschicht 13 zusätzlich H₂O, N₂O, O₂ oder H₂O₂ in die Anlage geleitet werden. Das Substrat 11 kann während des Wachstumsvorganges auf 100° bis 300° C geheizt werden, wodurch die optischen Eigenschaften ebenso wie durch die Variation der Plasmaleistung definiert modifiziert werden können. Die abgeschiedenen Schichten haben eine im Mikrometerbereich liegende Dicke, vgl. oben. Bei Verwendung von (CH₃)₃ SiCl bestehen sie aus einem amorphen SiC-Netzwerk, bei dem die sogenannten "Dangling Bonds" durch Wasserstoff und Chlor abgesättigt sind. Ihre Bezeichnung lautet dann a-SiC: H, Cl.

Bei einer zusätzlichen Einspeisung von sauerstoffhaltigen Dämpfen in den Abscheideprozeß erhöht sich der Sauerstoffanteil in der gewachsenen Schicht. Diese werden dann als a-SiCO: H, Cl-Schichten bezeichnet, weil Sauerstoff als Netzwerkbildner beteiligt ist.

Bei UV-Anregung der Schicht 12 kann eine breitbandige Photolumineszenz von 350 bis 550 nm mit einem spektralen Maximum bei 450 nm beobachtet werden. Die Lage des Lumineszenzmaximums läßt sich durch eine Erhöhung der Substrattemperatur oder Vergrößerung der Pharmaleistung während des Wachstums und bis zu 100 nm zu längeren Wellenlängen verschieben ("Redshift").

Eine Verringerung der Substrattemperatur oder der Plasmaleistung sowie durch Zugabe von H₂O oder H₂O₂ in das Gasgemisch, läßt sich das Maximum der Lumineszenz um bis zu 50 nm zu kürzeren Wellenlängen verschieben ("Blueshift").

Analog dazu läßt sich das sogenannte "Tauc-Gap", also der Einsatz der Fundamentalabsorption bei amorphen Materialien der Schicht 12 beeinflussen. Es können, je nach Herstellungsmethode, Energielücken zwischen 2,6 eV (Redshift) und 3,5 eV (Blueshift) eingestellt werden. Die Photolumineszenz hat eine sehr kleine Abklingzeit (< 5 ns) und ist nur wenig temperaturempfindlich. Die hergestellten Schichten 12, 13 und 14 sind mechanisch, thermisch und chemisch verhältnismäßig stabil. Wegen der erhöhten Energielücke (Blueshift) oxidierter bzw. bei geringeren Substrattemperaturen oder kleineren Plasmaleistungen hergestellte Schichten 12 ist deren optischer Brechungsindex im sichtbaren Spektralbereich deutlich kleiner als der Brechungsindex bei nichtoxidierten bzw. bei höheren Temperaturen oder Plasmaleistungen gewachsenen Schichten 12 und strebt den Wert von Quarzglas an. Durch Kombination von Schichten 12, vgl. auch oben können optische Wellenleiter mit verschiedenen Brechungsindizes hergestellt werden.

### Bezugszeichenliste

- 10: lichtwellenleitende Struktur
- 11: Substrat
- 12: a-SiC-Schicht
- 13: Abdeckschicht
- 14: Abstandschicht
- 15: Detektionselement
- 16: UV-Licht
- 17: Lichtwelle

## Patentansprüche

1. Lichtwellenleitende Struktur auf einem Substrat, dadurch gekennzeichnet, daß auf dem Substrat (11) eine a-SiC-Schicht (12) aufgebracht ist, die im sichtbaren Spektralbereich photolumineszierende Eigenschaften aufweist.

2. Lichtwellenleitende Struktur nach Anspruch 1, dadurch gekennzeichnet, daß die a-SiC-Schicht (12) Wasserstoff und/oder Chlor und/oder Sauerstoff enthält.

3. Lichtwellenleitende Struktur nach einem oder beiden der Ansprüche 1 oder 2, dadurch gekennzeichnet, daß die a-SiC-Schicht (12) im Bereich von 0,1 bis 10 µm dick ist.

4. Lichtwellenleitende Struktur nach einem oder mehreren der Ansprüche 1 bis 3, dadurch gekennzeichnet, daß der Brechungsindex der a-SiC-Schicht (12) im Bereich von n = 1,7 bis 2,5, vorzugsweise im Bereich von 1,7 bis 2,2 liegt.

5. Lichtwellenleitende Struktur nach einem oder beiden der Ansprüche 1 bis 4, dadurch gekennzeichnet, daß auf der a-SiC-Schicht (12) eine siliziumhaltige Abdeckschicht (13) vorgesehen ist.

6. Lichtwellenleitende Struktur nach einem oder mehreren der Ansprüche 1 bis 5, dadurch gekennzeichnet, daß zwischen dem Substrat (11) und der a-SiC-Schicht (12) eine siliziumhaltige Abstandschicht (14) vorgesehen ist.

7. Lichtwellenleitende Struktur nach einem oder beiden der Ansprüche 5 oder 6, dadurch gekennzeichnet, daß die Abdeckschicht (13) und/oder die Abstandschicht (14) einen Brechungsindex n ≧ 1,5 aufweisen.

8. Lichtwellenleitende Struktur nach einem oder mehreren der Ansprüche 5 bis 7, dadurch gekennzeichnet, daß die Schichtdicke der Abdeckschicht (13) im Bereich von 0,1 bis 10 µm liegt.

9. Lichtwellenleitende Struktur nach einem oder mehreren der Ansprüche 5 bis 8, dadurch gekennzeichnet, daß die Schichtdicke der Abstandschicht (14) im Bereich von 2 bis 5 µm liegt.

10. Lichtwellenleitende Struktur nach einem oder mehreren der Ansprüche 1 bis 9, dadurch gekennzeichnet, daß im Substrat (11) ein mit der a-SiC-Schicht (12) in Kontakt stehendes, den sichtbaren Spektralbereich von Licht detektierendes Element (15) vorgesehen ist.

11. Lichtwellenleitende Struktur nach Anspruch 10, dadurch gekennzeichnet, daß die laterale Ausdehnung der a-SiC-Schicht groß gegen die laterale Ausdehnung des Detektionselementes (15) ist.
